# EUROPÄISCHE PATENTANMELDUNG

(11) **EP 2 371 985 A1**
(43) Veröffentlichungstag der Anmeldung: **05.10.2011**
(21) Anmeldenummer: 10405059.6
(22) Anmeldetag: 23.03.2010
(51) Int. Cl.: C23C 4/02, C23C 4/08, C23C 4/12, C23C 4/18, B05B 7/20, B05B 7/22, A47J 36/02

(54) **Anlage und Verfahren zur Beschichtung wenigstens eines Gegenstands, insbesondere eines Küchengeräts, sowie dieser Gegenstand selber**

(71) Anmelder: Hort, Stefan, 3973 Venthône (CH)
(72) Erfinder: Hort, Stefan, 3973 Venthône (CH)

(57) **Zusammenfassung**

Eine Anlage zur Beschichtung einer Oberfläche wenigstens eines im Gebrauch Temperaturintervalle von mindestens 100°C aussetzbaren Gegenstands **(3),** vorzugsweise eines Kochgerätes wobei ein Grundmaterial **(92)** eines die zu beschichtende Oberfläche aufweisenden Gegenstandteils einen thermischen Ausdehnungskoeffizienten aufweist, der sich um einige zehn Prozent von demjenigen eines aufzubringenden Auftragmaterials **(93)** unterscheidet. Die Anlage hat wenigstens eine erste Vorrichtung zur mechanischen Bearbeitung des Grundmaterials bzw. des aufgebrachten Auftragmaterials und wenigstens eine zweite Vorrichtung zum Aufbringen des Auftragmaterials, wobei eine der Vorrichtungen, vorzugsweise die zweite Vorrichtung bzw. eine der zweiten Vorrichtungen ein Behandlungsmittel aufweist, mit dem ein Dilatationsausgleichsbereich **(91; 93)** auf der Oberfläche erzeugbar ist. Durch das Vorhandensein wenigstens eines Dilatationsausgleichsbereichs **(91; 93)** weist die erzeugte Beschichtung eine lange Lebensdauer aufweist.

In einer bevorzugten Ausführungsvariante sind mit ein und derselben Anlage linear-symmetrische, rotationssymmetrische und mäanderförmige Beschichtungen und Bearbeitungen vornehmbar.

## Beschreibung

### Technisches Gebiet

Die Erfindung betrifft eine Anlage zur Beschichtung wenigstens eines Gegenstands (3), vorzugsweise eines Kochgerätes, ein hierzu verwendetes Verfahren sowie einen in der Anlage und mit dem Verfahren beschichteten Gegenstand.

### Stand der Technik

Beschichtet wird hier vorzugsweise mit einem magnetisierbaren Material, um einen für eine Induktionsheizung verwendbaren Gegenstand, insbesondere um ein Kochgerät, herzustellen.

Immer mehr werden für das Kochen und Wärmen von Speisen Herde mit Induktionssystemen eingesetzt. Der Vorteil gegenüber herkömmlichen Kochherden liegt in der fast verlustlosen Energieübertragung in den Pfannenboden direkt von einer unmittelbar unter der Herdoberfläche angeordneten Induktionsspule.

Die für eine Induktionsheizung zuständige Beschichtung besteht aus "magnetisch weichen Stoffen" [hohe Permeabilität und geringe Hysterese]. Im Gegensatz hierzu haben "magnetisch harte Stoffe" [möglichst hohe Koezitivkraft und hohe Remanezinduktion] ausgeprägte Hysterese-Eigenschaften; letztere werden zur Herstellung von Dauermagneten verwendet.

Je nach Breite der Hystererisschleife unterscheidet man "magnetisch weiche" und "magnetisch harte" Substanzen. Je grösser die Koerzitivkraft ist, desto "härter" ist das Material.

Aluminium ist für die Herstellung von Pfannen und Kochgeräten wegen der anerkannten Lebensmitteltauglichkeit und wegen der ausgezeichneten Wärmeleitfähigkeit prädestiniert und wird dafür weltweit in hohem Mass eingesetzt. Damit Kochgeräte aus Aluminium auf dem Induktionsherd eingesetzt werden können, muss auf der Bodenseite des Aluminiumgeschirres eine Schicht aus magnetisierbarem Eisen oder Stahl aufgebracht werden.

Es hat sich nun gezeigt, dass auf das Aluminium von Pfannen aufgebrachte eisenhaltige Beschichtungen im Laufe des Gebrauchs abblättern, auch kann sich eine magnetische Energieübertragung zwischen Kochherd und Boden der Pfanne bzw. des Küchengeräts im Laufe der Zeit verschlechtern.

### Aufgabe der Erfindung

Aufgabe der Erfindung ist es, eine Anlage und ein Verfahren vorzustellen, mit der bzw. mit dem ein Gegenstand herstellbar ist, dessen Induktionsbeschichtung eine lange Lebensdauer bei einer guten gleich bleibenden Energieübertragung gewährleistet.

### Lösung der Aufgabe

Die Lösung der Aufgabe geht von der Erkenntnis aus, dass eine eisenhaltige Beschichtung auf einem Aluminiumgrundmaterial starken mechanischen Spannung bei einer Erwärmung ausgehend von einer Umgebungstemperatur auf über 100 °C, in der Regel sogar über 200°C wie, sie beim Bratvorgang ohne weiteres auftreten können, ausgesetzt ist [1ₜ = 1₀ (1 +αt]. Das Wechselspiel aus Erwärmung und anschliessender Abkühlung, welche zudem noch schnell im Kochvorgang vonstatten gehen kann, erzeugt Spannungswechsel, welche zur Schichtablösung führen können. Der Ausdehnungskoeffizient des Eisens (α ~ 12 x 10⁻⁶ °C) beträgt gerade mal die Hälfte desjenigen von Aluminium (α ~ 23,8 x 10⁻⁶ °C). Materialien wie Kobalt und Nickel, welche ebenfalls für "weichmagnetische" Materialien verwendet werden, liegen in der gleichen Grössenordnung. Temperatur bedingte Spannungen bei mit einer eisenhaltigen Beschichtung versehenen Kochgeräten, insbesondere Pfannen, könnten lediglich dadurch reduziert werden, dass Eisenpfannen verwendet werden, welche allerdings schwer sind und einen schlechte Wärmeleitung aufweisen. Man könnte die Pfannen jedoch aus Kupfer herstellen, dessen Wärmeausdehnungskoeffizient bei lediglich α = 16,6 x 10⁻⁶ °C liegt. Kupfer ist u.a. jedoch schwer und teuer, und im direkten Kontakt mit Lebensmitteln nicht zugelassen; d.h. es müsste immer noch innen beschichtet werden.

Die Erfindung schlägt nun ein Verfahren vor, dass es gestattet, weiterhin grossen Temperaturschwankungen ausgesetztes Aluminiumgrundmaterial mit einer eisenhaltigen magnetisierbaren Beschichtung zu versehen, welche eine lange Lebensdauer aufweist, in dem in die Beschichtung Dilatationsausgleichsbereiche eingebracht werden. Diese Dilatationsausgleichsbereiche reduzieren die in der eisenhaltigen Beschichtung auftretenden mechanischen Spannungen. Reduzierte Spannungen bedingen eine verlängerte Lebensdauer, da weniger oder gar keine Spannungsrisse auftreten. Ferner werden eisenhaltige Beschichtungsbereiche nicht mehr in kritische Dehnungsbereiche gebracht, in denen eine Versprödung des Materials erfolgen kann. Versprödete Schichtbereiche und Schichtbereiche, welche in die Nähe einer plastischen Verformung gebracht werden, erleiden eine Reduktion ihrer magnetischen Eigenschaften (die relative Permeabilität sinkt).

Die Differenz der thermischen Ausdehnungskoeffizienten von Aluminium und Eisen ist 0,012 mm/m/°C. Das ergibt für einen Pfannenradius von 100 mm bei einem Temperaturanstieg von 300°C gegenüber Umgebungstemperatur einen Ausdehnungsunterschied von 0,36 mm. Normalerweise liegt die Kochtemperatur zwischen 100°C und 200°C; 300°C ist ein Maximalwert.

Diese Dilatationsausgleichsbereiche können nun als eine Zwischenschicht zwischen der Aluminiumoberfläche und der eisenhaltigen Beschichtung ausgebildet werden. Ergänzend sei bemerkt, dass unter einem Bereich jede räumliche Ausdehnung angenommen wird. Hierunter fällt eine durchgehende poröse Schicht auf der die restliche Beschichtung schwimmt, sowie in sich flächenmässig geschlossene bzw. nicht geschlossene Streifen und mehrere Inseln.

Damit ein Dilatationsausgleichsbereich wirken kann, sollte diese Schicht mindestens doppelt so dick sein, wie der Ausdehnungsunterschied, also 0,72 mm bei einem Pfannenradius von 100 mm. Versuche haben ergeben, dass die Haftung der Beschichtung auf dem Pfannenboden schon bei wesentlich geringeren Schichtdicken des Dilatationsausgleichsbereichs verbessert wird; im Gegensatz zu einem Schichtaufbau ohne Dilatationsausgleichsbereich bzw. -bereichen.

Es können aber auch in die Zwischenschicht bzw. in die eisenhaltige Schicht selbst Dilatationsausgleichsbereich eingebracht werden. Diese Dilatationsausgleichsbereiche werden in vorteilhafter Weise als poröser Bereich bzw. Bereiche ausgebildet. Poröse Bereiche können einen Spannungsausgleich bedeutend besser bewirken als kompakte Bereiche. Diese Ausgleichsbereiche können nun als Zwischenschicht über die ganze Fläche , als in sich geschlossene umlaufende Streifen oder auch als Inseln ("Fettaugen-artig") ausgebildet werden. Es könnten aber auch sogenannte "Dehnungsfugen", welche aus einem anderen Material bestehen, aufgebracht werden.

Eine Haftschicht auf einem Pfannenboden hat normalerweise eine Stärke von 0,02 mm. Wird ein Dilatationsausgleichsbereich mit dem Material der Haftschicht ausgebildet, so bedingt das eine grössere Schichtdicke der Haftschicht. Wenn der Dilatationsausgleichsbereich aus magnetisierbarem Material besteht, erreicht man damit zwei Funktionen, nämlich einen Ausgleich und eine Induktionsfähigkeit. Den Dilatationsausgleichbereicht wird man deshalb vorteilhafterweise in die magnetisierbare Schicht verlegen bzw. diese gesamthaft als Dilatationsausgleichsbereich ausbilden.

Für eine gute Induktionsfähigkeit eignet sich eine magnetisierbare Schicht mit einer Dicke von 0,3 bis 0,5 mm, bei Eisen wird die maximale Induktionsleistung bei 0,4 mm erreicht. Da ein Dilatationsausgleichsbereich porös ist, muss eine Schichtdicke zum Erreichen einer maximalen Induktionsleistung entsprechend dicker sein. Ein Dilatationsausgleichsbereich sollte aus Korrosionsgründen gegen aussen immer mit einer nichtporösen Schicht überdeckt sein.

Gemäss obigen Ausführungen wurde von einer Erwärmung von Aluminiumpfannen bzw. Kochgeräten ausgegangen. Analoge Verhältnisse herrschen jedoch auch bei wiederholten Abkühlungsvorgängen. Als Grundmaterial ist Aluminium und eine eisenhaltige Beschichtung angegeben. Gleiche Überlegungen können jedoch für alle Materialien und Beschichtungen mit signifikant unterschiedlichen Ausdehnungskoeffizienten angestellt werden.

Die zur Beschichtung und Bearbeitung, d.h. Behandlung wenigstens eines Gegenstands verwendbare Anlage hat wenigstens eine erste Vorrichtung zur mechanischen Bearbeitung einer Oberfläche des Gegenstands, wenigstens eine zweite Vorrichtung zum Aufbringen eines Beschichtungsbelags der Beschichtung auf der Oberfläche und eine linear wirkende Fördereinrichtung, mit der Gegenstände mittels eines Förderwegs von wenigstens einer ersten in wenigstens eine zweite Vorrichtung bringbar sind. Als Gegenstände werden hier vorzugsweise Pfannen und Küchengeräte beschichtet und bearbeitet. Anstelle dieser Gegenstände können auch andere, hauptsächlich in der Industrie verwendbare Gegenstände, wie beispielsweise Tiegel, beschichtet und bearbeitet, d.h. behandelt werden. Da diese Behandlung in ein und derselben Anlage erfolgt, können die Gegenstände an einer Seite der Anlage eingebracht und dann am Ende der Anlage nach deren Durchlaufen fertig behandelt und somit gebrauchsfertig entnommen werden. Eine Anzahl verwendeter erster und zweiter Vorrichtungen für die Behandlung richtet sich einmal nach dem Zweck der Beschichtung und dem gewählten Verfahren.

In vorteilhafter Weise hat jede Anlage wenigstens eine erste Vorrichtung mit jeweils einer Positioniereinrichtung für ein dazu gehörendes erstes Mittel zur Bearbeitung der Gegenstandsoberfläche, wenigstens eine zweite Vorrichtung mit ebenfalls jeweils einer Positioniervorrichtung für ein dazu gehörendes zweites Mittel zum Aufbringen des Beschichtungsbelags. Jede Positioniereinrichtung hat eine Verschiebeeinrichtung, mit welcher das entsprechende Mittel nicht parallel, vorzugsweise annähernd senkrecht, zu einer Bewegungsrichtung der linear wirkenden Fördereinrichtung verschiebbar ist, damit eine mäanderförmige Beschichtung erzeugbar ist. Einige oder alle Vorrichtungen können eine Halteeinrichtung für die zu behandelnden Gegenstände aufweisen. Weist nun diese Halteeinrichtung ein um eine vorzugsweise zentrische Achse rotierbar ausgebildetes Halteelement für den betreffenden Gegenstand auf, so ist einerseits eine linear symmetrische bzw. rotationssymmetrische sowie auch eine mäanderförmige Behandlung des Gegenstands in derselben Vorrichtung unter Zuhilfenahme der Verschiebeeinrichtung vornehmbar. Ob nun eine linear-symmetrische oder eine rotationssymmetrische Beschichtung erzeugt wird, hängt davon ab, ob eine Rotation ums Zentrum oder von diesem entfernt erfolgt. In der Regel werden bei gebräuchlichen Pfannen rotationssymmetrische Beschichtungen vorgenommen. Es gibt jedoch auch Gegenstände mit einer zu beschichtenden Fläche, welche nicht rund und auch nicht eine recht- bzw. vieleckige Kontur aufweist, sondern oval ausgebildet ist. In diesem Fall wird man eine nicht zentrische Rotation wählen. Die Anlage löst somit eine zusätzliche Aufgabe, rotationssymmetrische und ovale Gegenstände sowie auch rechteckige und vieleckige Gegenstände behandeln zu können. Ein Wechsel zwischen diesen Behandlungsformen bedingt nur einen äusserst geringen Mehraufwand, da die bestehenden Maschinenteile der Vorrichtung bzw. Vorrichtungen nur umfunktioniert werden müssen.

In einer weiteren bevorzugten Ausführungsvariante haben die einzelnen zur Behandlung dienenden Vorrichtungen der Anlage eine als Vakuumhalter ausgebildete Halteeinrichtung, mit der jeder Gegenstand in seiner Lage halterbar ist. Ferner hat vorzugsweise die Fördereinrichtung eine Hebeeinheit. Die Fördereinrichtung ist somit nicht nur linear verschiebbar, sondern auch höhenverstellbar ausgebildet. Die von der Fördereinrichtung zu transportierenden Gegenstände sind somit mit einem Fördermittel der Fördereinrichtung von den jeweiligen Halteeinrichtungen abnehmbar und zur nachfolgenden Halteeinrichtung der nachfolgenden Vorrichtung transportierbar. Durch dieses Anheben, Transportieren und Absenken und wieder Zurückbewegen, ist eine Fördereinrichtung mit einem gegenüber dem gesamten Transportweg geringen Förderweg geschaffen, welche es erlaubt, Gegenstände über einen grossen Transportweg in der Anlage getaktet zu transportieren.

Sämtliche Vorrichtungen der Anlage, ob sie nun zum Beschichten oder zum Bearbeiten dienen, sind bis auf ein jeweiliges für den betreffenden Behandlungsvorgang des Gegenstands notwendiges Behandlungsmittel gleich ausgebildet und haben gleiche Volumenmasse. Diese Ausbildungsart gestattet ein problemloses Zusammenstellen mehrerer Vorrichtungen und insbesondere einen getakteten Behandlungszyklus. Im Servicefall können einzelne Vorrichtungen einfach, ohne eine Modifizierung der Anlage, lediglich mit einem einfachen Auswechseln des betreffenden Behandlungsmittels, ausgetauscht werden .

In einer weiteren bevorzugten Ausführungsvariante ist wenigstens eine der Vorrichtungen als Kapelle mit einer Absaugeinrichtung ausgebildet, damit bei der Bearbeitung und Beschichtung entstehende Dämpfe und Verunreinigungen abgesaugt werden können.

Zur beispielsweisen Erzeugung einer "Induktionsbeschichtung" wird eine einem Küchenherd zuzuwendende Oberfläche des Gegenstands, also beispielsweise ein Pfannenaussenboden, zuerst sandgestrahlt, dann mit einer Haftlegierung versehen, auf die dann eine Schicht oder mehrere Schichten eines magnetisch wirkenden und elektrisch leitenden Materials aufgebracht werden. Die nun erhaltene Beschichtung wird vorzugsweise ebengeschliffen und dann kompaktiert. Wie eingangs angeführt, kann nun die Haftschicht als Ganzes als Dilatationsausgleichsbereich oder nur Teile dieser Schicht ausgebildet werden. Die eisenhaltige, magnetisierbare Schicht bzw. Schichten enthalten vorzugsweise nur einzelne voneinander getrennte Dilatationsausgleichsbereiche.

### Kurze Beschreibung der Zeichnungen

Die zur Erläuterung von Ausführungsbeispielen der Erfindung verwendeten Zeichnungen zeigen in
- Fig. 1: einen Querschnitt durch eine Anlage zur Beschichtung und Bearbeitung einer rotationssymmetrischen Pfanne als Gegenstand,
- Fig. 2: eine stirnseitige Sicht auf die Anlage in Blickrichtung II ― II in **Figur 1** auf eine erste Vorrichtung zum Sandstrahlen eines rotationssymmetrischen ausgebildeten Gegenstands, wobei zum besseren Verständnis die Fördereinrichtung mit Antriebsmotor, aber ohne Beladestation und mit abgesenktem Gegenstand dargestellt ist,
- Fig. 3: eine Ausführungsvariante in einer Darstellung analog zu **Figur 2**, wobei jedoch ein betreffendes Behandlungsmittel (hier die Sandstrahleinrichtung) während eines Anhebens der Fördereinrichtung seitlich verschiebbar ist und somit hier seitlich verschoben dargestellt ist,

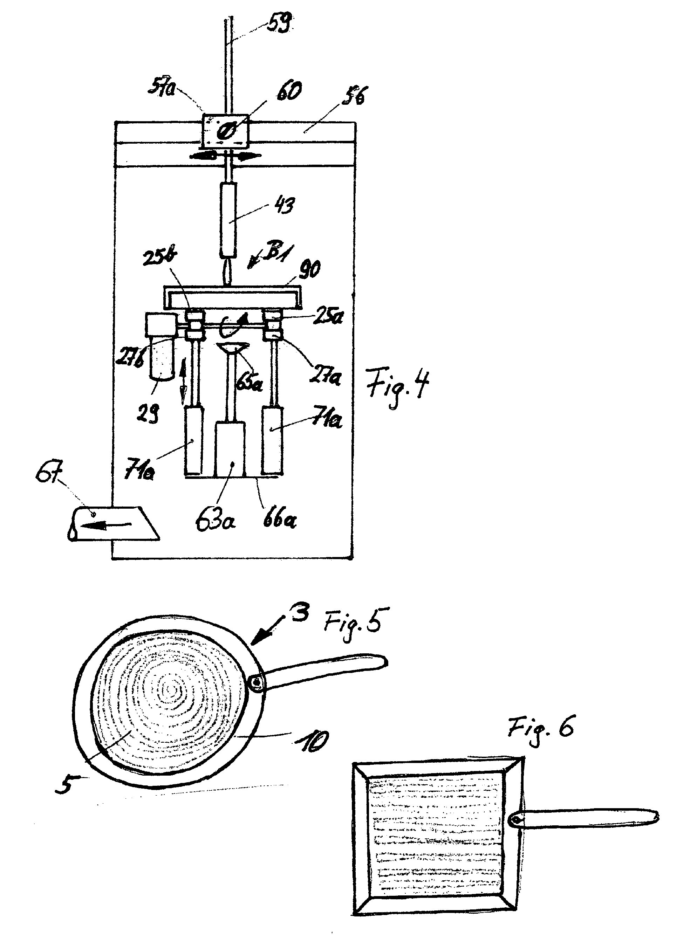

- Fig. 4: eine zu **Figur 2** analoge Darstellung, wobei hier jedoch ein Gegenstand mit einer rechteckigen Fläche behandelt wird,
- Fig. 5: eine schematische Darstellung eines behandelten rotationssymmetrischen Gegenstands mit Blick auf dessen Boden,
- Fig. 6: eine schematische Darstellung eines behandelten rechteckigen Gegenstands,
- Fig. 7: einen Querschnitt durch eine Beschichtung eines der Gegenstände, wobei hier eine Haftschicht als Dilatationsausgleichsbereich porös ausgebildet ist und
- Fig. 8: eine Draufsicht auf eine Beschichtung eines Pfannenbodens, wobei ein poröser Dilatationsausgleichsbereich in der Haftschicht, welcher auch in der eisenhaltigen mag- netisierbaren Schicht angeordnet sein könnte, da von aussen nicht sichtbar, gestrichelt dargestellt ist.

### Wege zur Ausführung der Erfindung

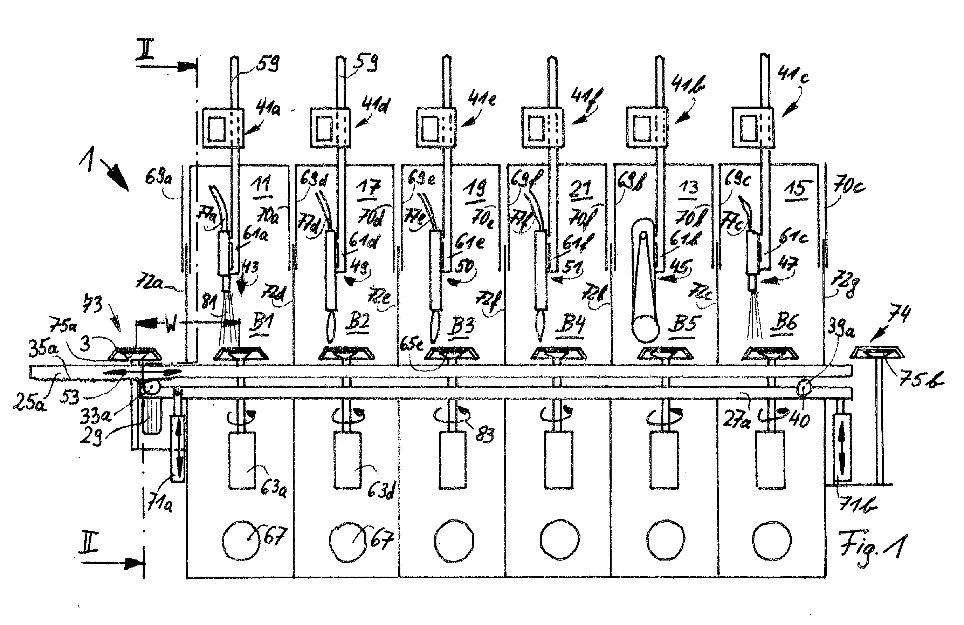

In **Figur 1** ist als Ausführungsbeispiel eine Anlage **1** zur Beschichtung wenigstens eines Gegenstands dargestellt. Als Gegenstand wird hier beispielsweise eine Bratpfanne **3** verwendet, deren äusserer Boden **3** mit einer zur Induktionsheizung verwendbaren Beschichtung **7** versehen werden soll. Ein Rand **10** der Pfanne **3** verläuft ausgehend von einem inneren Boden **9** der Pfanne **3** konisch nach aussen, wobei ein derartiger Verlauf nicht zwingend ist. Der Pfannenrandverlauf kann beliebig nach "oben" gerichtet sein. Die Anlage **1** hat erste Vorrichtungen **11,13** und **15** zur mechanischen Bearbeitung der Oberfläche dieses äusseren Pfannenbodens **5**. Ferner hat die Anlage **1** zweite Vorrichtungen **17, 19** und **21** zur Beschichtung des äusseren Pfannenbodens **5**. Die Anlage **1** weist zudem eine linear wirkende Fördereinrichtung **23** auf, mit der Pfannen **3** zu den ersten und zweiten Vorrichtungen **11, 13, 15, 17, 19** und **21** transportierbar sind. Die Fördereinrichtung **23** durchdringt in einer vorzugsweise horizontalen Lage sämtliche nebeneinander angeordneten Vorrichtungen **11, 13, 15, 17, 19** und **21**.

Die Fördereinrichtung **23** hat zwei Oberbalken **25a** und **25b** als Fördermittel, zwei Unterbalken **27a** und **27b,** einen Antriebsmotor **29** mit zwei auf einer Achse **31** des Motors **29** sitzenden Ritzeln **33a** und **33b,** welche in je ein Zahnstangenstück **35a** und **35b** an der Unterseite **37a** und **37b** jedes Oberbalkens **25a** und **25b** eingreifen sowie ein Rollenpaar mit den Rollen 39a und 39b, wobei eine die beiden Rollen 39a und **39b** des Rollenpaares verbindende Achse 40 in den beiden Unterbalken **27a** und **27b** gelagert ist. Auf die Länge der Ober- und der Unterbalken **25a/25b** bzw. **27a/27b** wird unten eingegangen. Die beiden Zahnstangenstücke 35a und 35b sind an den Oberbalken **25a** und **25b** parallel zu einander angeordnet und haben eine um eine Toleranz grössere Länge als ein unten beschriebener Förderweg W.

Jede erste Vorrichtung **11, 13** und **15** weist oberhalb der Fördereinrichtung **23** eine erste Positioniervorrichtung **41a**, **41e** und **41f** sowie **52a**, **52e** und **52f** für ein erstes Behandlungsmittel **43, 45** bzw. **47** zur Bearbeitung des äusseren Pfannenbodens **5** und jede zweite Vorrichtung **17, 19** und **21** ebenfalls oberhalb der Fördereinrichtung **23** eine zweite Positioniervorrichtung **41b, 41c** und **41d** für ein zweites Behandlungsmittel **49, 50** bzw. **51** zum Aufbringen des Beschichtungsbelags auf. Jede Positioniervorrichtung **41a** bis **41f** hat eine Querverschiebeeinrichtung **41a** bis **41f,** mit welcher das entsprechende Mittel **43, 45, 47, 49, 50** und **51**, hier ein jeweiliges Behandlungsmittel zur Behandlung, nicht parallel, hier vorzugsweise annähernd senkrecht, zu einer unten beschriebenen Bewegungsrichtung **53** der linear wirkenden Fördereinrichtung **23** verschiebbar ist. Jede Querverschiebeeinrichtung hat eine im oberen Bereich jeder Vorrichtung **11, 13, 15, 17, 19** und **21** angeordnete Querverschubschiene **56** mit einem Querverschubschlitten **57.** Ferner haben die Positioniervorrichtungen 41a bis **41f** eine Behandlungsmittelhöhenverstelleinheit für das betreffende Mittel **43, 45, 47, 49, 50** und **51**, wobei jede Höhenverstelleinheit einen stangenförmigen Teil **59** aufweist, der durch einen weiteren nicht dargestellten Antrieb im Bereich des jeweiligen Querschlitten **57** in eine Auf-/Abwärtsbewegung versetzbar ausgebildet sein kann. Am dem Querschlitten **57** abgewandten Endbereich hat der Teil 59 eine Behandlungsmittelaufnahme **61a** bis **61f** für das entsprechende Mittel **43, 45, 47, 49, 50** und **51**.

In der Regel reicht jeweils eine händisch einstellbare Höhenverstelleinheit, da mit einer Einstellung viele Pfannen **3** behandelt werden. Für händisch bedienbare Höhenverstelleinheiten können beispielsweise Querverschubschlitten **57a** bis **57f** mit einer zur Querverschubschiene **56** im rechten Winkel vertikal verlaufenden Bohrung angeordnet werden, welche dann den das jeweilige Behandlungsmittel **43, 46, 47, 49, 50** bzw. **51** tragenden stabförmigen Teil **59** aufnimmt. Der Teil **59** kann im Querverschubschlitten **57a-f** durch eine Klemmschraube 60 fixiert werden.

Eine gesteuerte Höhenverstelleinheit ist lediglich in den Vorrichtungen notwendig, in denen Dilatationsausgleichbereiche direkt auf der Oberfläche des Grundmaterials oder in der Beschichtung selbst zu erzeugen sind.

Jede der Vorrichtungen **11, 13, 15, 17, 19** und **21** hat unterhalb der Fördereinrichtung **23** einen Rotationsantrieb **63a** bis **63f,** der mit einer innen hohlen und über den jeweiligen Antrieb **63a** bis **63f** verlängerten Rotationsachse **64** zwischen den beiden Ober- und Unterbalken **25a/b** und **27a/b** hindurchgreift. An seinem, dem Rotationsantrieb **63a-f** abgewandten Ende trägt jede Rotationsachse **64** einen Vakuumteller **65**, dessen innerer Tellerboden mit dem Hohlraum der Rotationsachse **64** verbunden ist. Obwohl alle Vakuumteller **65** gleich ausgebildet sind, trägt der Vakuumteller der Vorrichtung **11** das Bezugszeichen **65a,** derjenige der Vorrichtung **17** das Bezugszeichen **65b**, derjenige der Vorrichtung **19** das Bezugszeichen **65c**, derjenige der Vorrichtung **21** das Bezugszeichen **65d**, derjenige der Vorrichtung **13** das Bezugszeichen 65e und derjenige der Vorrichtung **15** das Bezugszeichen **65f**. Das andere Ende jeder Rotationsachse **64** ist mit einer nicht dargestellten Vakuumanlage verbunden.

Im unteren Teil jeder Vorrichtung **11, 13, 15, 17, 19** und **21** ist eine Absaugung **67** vorhanden. Mit in der jeweiligen Vorrichtung **11, 13, 15, 17, 19** und 21 infolge der Bearbeitung der Pfannenböden bzw. deren Beschichtung sich bildende Nebel können somit abgesaugt werden. Durch diese Absaugung **67** lässt sich jede Vorrichtung **11, 13, 15, 17, 19** und **21** analog einer sogenannten Kapelle betreiben.

Wie oben bereits angedeutet, sind alle Vorrichtungen **11, 13, 15, 17, 19** und 21 gemäss einer Darstellung der Anlage **1** in **Figur 1** beginnend an der linken Seite mit der Vorrichtung **11**, dann **17, 19, 17, 21, 13** und 15 nebeneinander und aneinander anschliessend liegend angeordnet. D.h. eine Aussenwand **69** der Vorrichtung **11** ist somit eine linke Aussenwand der Anlage **1** und eine Aussenwand **70** der Vorrichtung **15** eine rechte Aussenwand der Anlage **1** in Figur **1**. Eine rechte Aussenwand **70a** der Vorrichtung **11** liegt somit an einer linken Aussenwand **69b** der Vorrichtung **17,** usw. an. Die Fördereinrichtung **23** weist benachbart zu den Aussenwänden **69a** und **70f** je ein an den Unterbalken **27a** und **27b** angreifendes Hubzylinderpaar **71a** und **71b** als Hebeeinheit auf, mit der die Fördereinrichtung **23** neben ihrer Linearverschiebbarkeit mit einer vorgegebenen Hebehöhe höhenverstellbar ausgebildet ist. Jedes Hubzylinderpaar **71a** und **71b** ist auf einer Grundplatte **66a** bzw. **66a** befestigt. Hierdurch erhält die Fördereinrichtung **23** eine für den Betrieb notwendige Stabilität. Zur Erhöhung der Stabilität können auch nicht dargestellte Querverbindungen zwischen den Ober- bzw. Unterbalken **25a/b** bzw. **27a/b** vorgesehen werden. Die Querverbindungen müssten jedoch derart angeordnet werden, dass ausgehend von einer Lage der Rotationsachse **64** des jeweiligen Antriebsmotors **63a** bis **63f** nach vorn und hinten in Förderwegrichtung ein halber Förderweg W plus Toleranz frei ist. Die beiden Grundplatten **66a** und **66b** müssen nicht miteinander verbunden sein, da durch die Unterbalken **27a** und **27b** eine ausreichende Längsstabilität erreicht wird.

Jede Vorrichtung **11, 13, 17, 19** und **21** hat jeweils in ihrer linken Seitenwand **69a, 69d, 69e, 69f** bzw. **69b** eine Hubtüre **72a, 72d, 72e, 72f** bzw. **72b**. In gleicher Höhe ist auf der gegenüberliegenden Seitenwand **70a, 70d, 70e, 70f** bzw. **70b** eine den Hubtüren **72a, 72d, 72e**, **72f** bzw. **72b** entsprechende Seitenwandöffnung **76a, 76d, 76e, 76f** bzw. 76b vorhanden. Die Vorrichtung **15** hat sowohl in ihrer linken wie auch in ihrer rechten Seitenwand 69c bzw. **70c** eine Hubtüre **72c** und **72g**. Die Hubtüren **72a** bis **72g** und die Seitenwandöffnungen **76a**, **76b** und **76d** bis **76f** sind oberhalb der Oberbalken **25a** und **25b** angeordnet und gestatten ein Durchschieben der Gegenstände **3** mittels der Fördereinrichtung **23** und nach dem Durchschieben ein Verschliessen, derart, dass kein für die Behandlung verwendetes Material sowie Abriebmaterial von einer Vorrichtung **11, 13, 15, 17, 19** und **21** in die jeweils benachbarte übertreten kann.

Zur Aussenwand **69a** der Vorrichtung **11** benachbart, ist eine Beladestation **73** für die zu beschichtenden und bearbeitenden, als Küchengeräte **3** ausgebildeten Gegenstände vorhanden. Zur Aussenwand **70c** der Vorrichtung **15** benachbart ist eine Entladestation **74** für die Gegenstände **3** vorhanden. Die Belade- und Entladestationen **73** und **74** haben einen Aufnahmeteller **75a** bzw. **75b**. Der Teller **75a** ist derart ausgebildet, dass der zu beschichtende äussere Pfannenboden **5** der darauf abzulegenden Pfanne **3** als Küchengerät eine genau definierte Position einnimmt. Die beiden Teller **75a** bzw. **75b** sind in nicht dargestellter Weise mit der Anlage **1** fest verbunden. Der Teller **75a** dient somit zur Eingangsjustierung der für die Behandlung (Bearbeitung und Beschichtung) vorgesehenen Pfanne **3**. Für den Teller 75b sind keine Ansprüche betreffend einer exakten Lage zum entladenden Küchengerät **3** gefordert. Die Pfanne **3** muss lediglich von ihm abgenommen werden können.

In **Figur 1** ist die Anlage **1** in einem Zustand dargestellt, in dem gerade die Beladestation 73 mit einem Küchengerät **3** beladen wurde. Die Oberbalken **25a** und **25b** als Fördermittel sind nun in ihrer Länge und Lage sowie zur Lage der Beladestation **73** derart ausgebildet, dass nach einem Anheben der Fördereinrichtung **23** und deren Bewegung um einen Förderweg W das Küchengerät **3** von der Beladestation **73** zur Lage der Rotationsachse **64** des Tellers **65a** der Vorrichtung **11** bringbar ist. Sämtliche Rotationsachsen **64** der Vakuumteller 65a bis **65f** der Vorrichtungen **11, 17, 19, 21, 13** und **15** sind in einem Abstand des Förderwegs W zur jeweilig benachbarten Vorrichtung angeordnet. Auch ist der Teller **75b** der Entladestation **74** in einem dem Förderweg W entsprechenden Abstand vom Vakuumteller **65c** der Vorrichtung **15** angeordnet; analog ist der Teller **75a** der Beladestation **73** zum Teller 65a der Vorrichtung **11** angeordnet.

Die parallel zueinander verlaufenden Ober- und Unterbalken **25a/b** und **27a/b** haben einen inneren Abstand, der so gross ist, dass die Rotationsachse **64** hindurch greifen kann. Die beiden Ober- und die beiden Unterbalken **25a/b** und **27a/b** sind starr miteinander verbunden.

Die in Figur **1** im Querschnitt dargestellten Vorrichtungen **11, 17, 19, 21, 13** und 15 der Anlage **1** werden von links nach rechts beschrieben. Die Vorrichtung **11** als erste der ersten Vorrichtungen **11, 13** und **15** von links in **Figur 1** dient zur Reinigung des äusseren Pfannenbodens **5** durch Sandstrahlen. Bei der hier beschriebenen Pfanne **3** handelt es sich um eine Aluminiumgusspfanne. Unter einer Reinigung wird verstanden, dass der äussere Pfannenboden **5** sauber, fett- und schmutzfrei gemacht werden muss; ferner soll dieser eine glatte und ebene Oberfläche aufweisen. Die Reinigung erfolgt mit einem an der Behandlungsmittelaufnahme **61a** angeordneten Sandstrahlgebläse als Behandlungsmittel **43**. Das Sandstrahlgebläse **43** ist über einen Schlauch **77a** mit einem nicht dargestellten Sandreservoir sowie auch mit einer nicht dargestellten Druckluftversorgung verbunden. Das Sandstrahlen erfolgt intensiv mit Korund, vorzugsweise Edelkorund, mit einer Korngrösse von 0,5 bis 1,0 mm bei einem Druck im Bereich von **6** bar. Aufgrund des Sandstrahlens soll eine Oberflächenrauhigkeit von ca. RA 15 erreicht werden. Nach dem Sandstrahlen wird in der Vorrichtung **11** die Oberfläche des äusseren Bodens **5** sauber geblasen.

In der von links auf die Vorrichtung **11** folgenden Vorrichtung **17** der zweiten Vorrichtungen wird umgehend auf den sandgestrahlten Boden **5** mittels eines thermischen Aufsprühverfahrens eine Haftlegierung aufgebracht. Das Aufsprühen erfolgt mit einer an der Behandlungsmittelaufnahme **61d** als zweitem Behandlungsmittel **49** angeordneten Düseneinrichtung. Zum Aufbringen der Haftlegierung, und auch der unten beschriebenen magnetisierbaren Beschichtung, sind diverse Verfahren möglich. Es wird hier beispielsweise mit einem Lichtbogensprühgerät gearbeitet, bei dem zwei, an je einen elektrischen Leiter **77d** angeschlossene Elektroden zusammengeführt werden, deren Material im entstehenden Lichtbogen schmilzt. Die Temperatur beim Auftragen ist im Lichtbogen selbst etwa 3000°C. Die Luft zum Zerstäuben des geschmolzenen Materials wird aber kalt zugeführt, wodurch der eigentliche Materialschweif ca. 1000°C warm ist. Die Wärmekapazität der Pfannenmasse bewirkt, dass das auftreffende Material des Materialschweifes sofort abgekühlt wird. Nach dem Beschichten hat die Pfanne **3** eine Temperatur im Bereich von **100** bis 200°C.

Bei dem hier beispielsweise beschriebenen Aufsprühverfahren bestehen die beiden Elektroden aus einer Nickel-Aluminium-Legierung mit einem Verhältnis von etwa 40% Nickel und 60% Aluminium. Es wird eine Schichtdicke zwischen **20** und **30** µm aufgebracht. In vorteilhafter Weise sollte sich das Verhältnis von Aluminium und Nickel in Bereichen zwischen **60** und 40% Aluminium sowie zwischen **40** und 60% Nickel befinden. Bei den Prozentzahlen handelt es sich um Gewichtsprozente.

Der Abstand des Lichtbogensprühgerätes zur zu beschichtenden Oberfläche wird derart eingestellt, dass eine poröse Schicht entsteht. Diese poröse Haftschicht wirkt als eine mechanische Isolationsschicht (Dilatationsausgleichsbereich), welche die unterschiedliche thermische Ausdehnung des Aluminiums des Grundmaterials des Pfannenbodens gegenüber derjenigen der eisenhaltigen nachfolgenden "weich-magnetisierbaren Induktionsbeschichtung" isoliert. Die Ausdehnung des Aluminiums ist nämlich etwa doppelt so gross, wie diejenige der eisenhaltigen Schicht. Wird diese Haftschicht als Dilatationsausgleichsbereich verwendet, so beträgt die Schichtdicke ca. 0,25 mm.

Auf die Vorrichtung **17** folgt die Vorrichtung **19,** mit der auf den mit einer Haftlegierung versehenen äusseren Pfannenboden **5** ein magnetisierbares Material in einem thermischen Sprühverfahren mit einer an der Behandlungsmittelaufnahme **61c** als zweitem Behandlungsmittel **50** angeordneten Düseneinrichtung aufgebracht wird. Beim thermischen Sprühverfahren wird aus der Düseneinrichtung **50** Eisenpulver als Induktionsschicht mit einer Schichtdicke von 120 bis 200 µm aufgetragen. Das Eisenpulver sowie ein Blasgas wird über einen Schlauch **77e** zugeführt. Man kann jedoch auch mit einem Lichtbogen und Eisenelektroden arbeiten. Diese erste Induktionsschicht kann auch als poröse Zwischenschicht ausgebildet werden.

Die auf die Vorrichtung **19** folgende Vorrichtung **21** dient analog zur Vorrichtung **19** zum Aufbringen eines weiteren magnetisierbaren Materials als zusätzliche Induktionsschicht. Als weiteres magnetisierbares Material wird eine Eisen-Nickellegierung mit einem Nickelanteil von 1 bis 20% aufgebracht. Das Aufbringen erfolgt mit einer als zweitem Mittel **51** ausgebildeten Düseneinrichtung, welche mit einem Lichtbogen mit Nickel-/Eisenelektroden (Stromzuführung **77f**) arbeitet. Nach einem Durchlaufen der beiden Vorrichtungen **19** und **21** weist der Gegenstand eine "induktionsschichtdicke" von 350 bis 400 µm auf.

Um eine gute Magnetisierbarkeit zu erreichen, wird am Besten duktiles Eisen verwendet. Allenfalls können auch rostfreie Materialien verwendet werden, wobei der Legierungsgehalt gering bleiben muss, um die Magnetisierbarkeit zu erhalten. Nickel und auch Chrom als Legierungszusatz bringen einen guten Korrosionsschutz.

Als sogenannte, für eine Induktionsheizung, verwendbare Materialien sind prinzipiell alle als Schicht aufbringbaren Materialien geeignet, welche eine maximale Permeabilität [µ ₘₐₓ/ µ ₀] von einigen Zehntausend bis einige Hunderttausend und eine elektrische Leitfähigkeit im Bereich von einigen Tausend kS/m [kilo Siemens pro Meter] haben.

Auf die Vorrichtung **21** folgt die Vorrichtung **13,** in der die mit magnetisierbarem Material beschichtete Oberfläche des Pfannenbodens 5 zur Eliminierung von beim thermischen Aufsprühen erzeugten Unebenheiten mit einem Schleifgerät als erstem Mittel 45 eben geschliffen wird. Das Schleifgerät 45 ist an der Behandlungsmittelaufnahme 61 b befestigt.

Die oben genannten Unebenheiten rühren aus den Sprühverfahren mit dem Lichtbogensprühgerät bzw. den -geräten her. Es können auch kleine Spritzer auftreten, welche eliminiert werden müssen.

Auf die Vorrichtung **13** folgt die Vorrichtung **15**. In der Vorrichtung **15** wird die Beschichtung des Pfannenbodens **5** mit Edelstahlkugeln, welche einen Durchmesser zwischen 1 mm und 2mm aufweisen, geglättet und kompaktiert. Gleichzeitig wird der beschichtete Pfannenboden 5 von Sprührückständen gereinigt. Die Stahlkugeln werden aus einer Düseneinrichtung als erstem Mittel **47** ausgeschleudert. Die Düseneinrichtung **47** ist an der Behandlungsmittelhalterung **61c** angeordnet. Die Stahlkugeln haben einen Durchmesser von 1 bis 2 mm, welche über eine Zuleitung **77c** mit Druckluft als Treibmittel befördert werden. Die Stahlkugeln werden unterhalb der Ober- und Unterbalken **25a/b** und **27a/b** in einem nicht dargestellten Trichter gesammelt und in einen Kreislauf zum Arbeitsmittel 47 geführt.

Das erfindungsgemässe Verfahren wird anhand einer Beschichtung mehrerer als Bratpfannen **3** ausgebildeten Gegenstände mit einem rotationssymmetrischem Boden beschrieben. Bei der Pfanne **3** wird der äussere Boden **5** derart beschichtet, dass sie auf Herden mit einem Induktionsheizsystem verwendet werden kann. Vor dem Aufbringen eines magnetisierbaren und elektrisch leitfähigen Materials für den induktionsbeheizbaren Pfannenboden 5 wird der Pfannenboden **5** vor- und nachbehandelt. In dem magnetisierbaren und elektrischen Belag werden die für die Aufheizung notwendigen Wirbelströme erzeugt. Die hier im Beispiel verwendeten Pfannen **3** haben einen Aluminiumboden mit einer Dicke von typischerweise 6 mm. Der Pfannenbodendurchmesser liegt typischerweise zwischen 10 und 35 cm.

Sämtliche ersten und zweiten Behandlungsmittel **43, 45, 47, 49, 50** und 51 sind über die entsprechenden Querverschiebungen **41a** bis **41f** für die in den einzelnen Verfahrensschritten durchzuführenden Behandlungen (Bearbeitungen und Beschichtungen) in der richtigen Lage und Höhe eingestellt.

In der nachfolgenden Verfahrensbeschreibung wird zuerst davon ausgegangen, dass die Anlage **1** "gegenstands-" bzw. "pfannenfrei" ist. Sind in sämtlichen Vorrichtungen **11, 13, 15, 17**, **19** und **21** Pfannen **3** vorhanden, ergibt sich ein kontinuierlicher Betrieb mit einer schrittweisen Bestückung und Entnahme mit bzw. von Pfannen **3.**

In einem ersten Verfahrensschritt wird eine erste Pfanne **3** mit ihrem unbehandelten äusseren Pfannenboden **5** nach oben ausserhalb der Aussenwand **69a** der Vorrichtung 11 auf den Teller **75a** der Beladestation **73** positioniert.

In einem zweiten Verfahrensschritt wird die Fördereinrichtung **23** über die beiden auf die Unterbalken **27a/b** wirkenden Hubzylinder **71a** und **71b** derart weit angehoben, dass eine freie "obere" Stirnseite **79** des Pfannenrands **10** über der Oberkante **80** des Aufnahmetellers **75a** zu liegen kommt. Die Hubtüren **72a** bis **72g** werden geöffnet. Es sei bemerkt, dass alle Teller, wie Aufnahmeteller **75a**, die Vakuumteller **65a** bis **65f** der Vorrichtungen **11, 13, 15, 17,** 19 und **21** und der Ablageteller 75b der Entnahmestation **74**, in ihren "oberen" Abmessungen, auf denen die Pfanneninnenböden 9 aufliegen, identisch ausgebildet sind.

Beim Anheben der Oberbalken **25a** und **25b** der Fördereinrichtung **23** liegt die Pfanne **3** mit ihrer freien Stirnseite **79** auf den Oberbalken **25a** und **25b** auf. Im angehobenen Zustand wird nun der Antriebsmotor **29** in Gang gesetzt und die beiden Oberbalken **25a** und **25b** über die mit dem Antriebsmotor **29** in Verbindungen stehenden Ritzel **33a** und **33b** gegenüber den Unterbalken **27a** und **27b** um den Förderweg W in Figur 1 nach rechts verschoben. Hierzu greifen die Ritzel **33a** und **33b** in auf der Unterseite der Oberbalken **25a** und **25b** angeordnete Zahnstangenstücke **35a** und **35b** ein. Durch diese Verschiebung kommt die erste Pfanne 3 in der Vorrichtung **11** in einer dortigen ersten Behandlungsstation **B1** über dem dortigen Vakuumteller **65a** zu liegen. Die Fördereinrichtung **23** wird über die Hubzylinder **71a** und **71b** abgesenkt, wodurch die erste Pfanne **3** mit der Oberfläche ihres Pfanneninnenbodens **9** bereits richtig positioniert auf dem Vakuumteller **65a** zu liegen kommt und nach dessen Vakuumbeaufschlagung auf diesem in zentrischer Lage fixiert ist. Die Hubtüren **72a** bis **72g** werden geschlossen. Der Antriebsmotor **29** wird in Rückwärtsrichtung betrieben, worauf die Oberbalken **25a** und **25b** um den Förderweg W zurückgefahren werden.

Das erste Behandlungsmittel **43** für den nun folgenden Vorgang des Sandstrahlens ist gemäss obigen Ausführungen in der Vorrichtung **11** bereits höhenrichtig eingestellt. Der Vakuumteller **65a** wird mit der auf ihm durch Vakuum gehaltenen ersten Pfanne **3** in Rotation und der Sandstrahlvorgang in Gang gesetzt. Das erste Mittel **43** wird gleichzeitig über den Querverschubschlitten **57a** der Querverschubeinrichtung **41a** derart verschoben, dass das Zentrum des Sandstrahls **81** zum Rand des rotierenden äusseren Pfannenbodens **5** verschoben wird. Hierdurch ist nun der gesamte äussere Pfannenboden **5** durch das Sandstrahlen sauber sowie fett- und schmutzfrei und mit einer Rauhigkeit von weniger als **20** µm erzeugt worden.

In einem vierten Verfahrensschritt wird eine zweite Pfanne **3** analog zur ersten auf dem Teller **75a** der Beladestation **73** aufgelegt. Die Fördereinrichtung **23** wird über die beiden Hubzylinder **71** und **71b** angehoben, wobei jeweils die "obere" freie Stirnseite **79** des Pfannenrands **10** der ersten und der zweiten Pfanne **3** über der Oberkante **80** des Aufnahmetellers **75a** bzw. des Vakuumtellers **65a** zu liegen kommt. Die Oberbalken **25a** und **25b** der Fördereinrichtung **23** werden, wie bereits oben erwähnt, um den Förderweg W nach links (in Figur **1**) bewegt und dann abgesenkt, worauf die erste Pfanne 3 auf dem Vakuumteller **65b** der zweiten Behandlungsstation **B2** der Vorrichtung **17** und die zweite Pfanne **3** auf dem Vakuumteller **65a** in der ersten Behandlungsstation **B1** der Vorrichtung 11 zu liegen kommt. Anschliessend werden die Oberbalken **25a** und **25b** wieder um den Förderweg W zurückbewegt.

In einem fünften Verfahrensschritt wird eine dritte Pfanne **3** mit ihrem inneren Pfannenboden **9** auf den Teller **75a** der Beladestation **73** gelegt und die beiden Vakuumteller **65a** und **65d** in den Behandlungsstationen **B1** und **B2** in Rotation versetzt. Das erste Mittel **43** zum Sandstrahlen sowie das zweite Mittel **49** zum Aufbringen der Haftlegierung befinden sich in einer höhenrichtigen, zentrischen Position über den betreffenden äusseren Pfannenböden **5.** Der bereits sandgestrahlte Pfannenboden **5** der ersten Pfanne **3** wird nun in der Behandlungsstation **B2** mit der Haftlegierung versehen und der äussere Pfannenboden **5** der zweiten Pfanne **3** wird, wie bereits oben beschrieben, in der Behandlungsstation **B1** sandgestrahlt. Auch zum Aufbringen der Haftlegierung wird das zweite Mittel **49** über den betreffenden Querverschubschlitten **57d** der Querverschubeinrichtung **41d** vom Pfannenbodenzentrum zum Pfannenbodenrand bewegt.

In einem sechsten Verfahrensschritt werden die Oberbalken **25a** und **25b** über die beiden Hubzylinder **71** und **71b** angehoben und um den Förderweg W, wie oben beschrieben, linear vorwärts bewegt, wodurch die erste Pfanne **3** in der Behandlungsstation **B3** der Vorrichtung **19**, die zweite Pfanne **3** in der Vorrichtung **17** in der zweiten Behandlungsstation **B2** und die dritte Pfanne **3** in der Vorrichtung **11** in der ersten Behandlungsstation **B1** abgelegt wird.

In einem siebten Verfahrensschritt erfolgt in der Vorrichtung **19** in der dritten Behandlungsstation **B3** eine Beschichtung des mit der Haftlegierung versehenen äusseren Pfannenbodens **5** der ersten Pfanne **3** mit einer ersten Schicht des weichmagnetischen und elektrisch leitfähigen Materials für eine Induktionsheizung. In der Vorrichtung **11** wird die dritte Pfanne **3** in der ersten Behandlungsstation **B1** sandgestrahlt und in der zweiten Vorrichtung 17 der sandgestrahlte Pfannenboden **5** der zweite Pfanne **3** in der zweiten Behandlungsstation **B2** mit der Haftschicht versehen. Auch in der Vorrichtung **19** wird ein höhenrichtig eingestelltes zweites Mittel **50** zum Aufbringen der Beschichtung vom Pfannenbodenzentrum zum Pfannenrand bewegt. Eine vierte Pfanne **3** wird auf den Teller **75a** der Beladestation 73 positioniert.

In einem achten Verfahrensschritt werden die beiden Oberbalken **25a** und **25b** über die beiden Hubzylinder **71** und **71b** angehoben und um den Förderweg W, wie oben beschrieben, linear vorwärts bewegt, wodurch die erste Pfanne 3 in der vierten Behandlungsstation **B4** der Vorrichtung **21**, die zweite Pfanne **3** in der dritten Behandlungsstation **B3** der Vorrichtung 19, die dritte Pfanne **3** in der zweiten Behandlungsstation **B2** der Vorrichtung 17 und die vierte Pfanne **3** in der ersten Behandlungsstation **B1** der Vorrichtung **11** abgelegt wird.

In einem neunten Verfahrensschritt wird eine fünfte Pfanne **3** auf den Teller **75a** der Beladestation **73** abgelegt. Die vierte bis zweite Pfanne **3** wird in den Behandlungsstationen **B3** bis **B1** der Vorrichtung **11, 17** bzw. **19** analog zu den obigen Verfahrensschritten bearbeitet bzw. beschichtet. Die erste Pfanne **3** wird in der vierten Behandlungsstation **B4** der Vorrichtung 21 mit dem zweiten magnetisch wirkenden Material besprüht. Für den Sprühvorgang wird der Vakuumteller **65f** mit Vakuum beaufschlagt, in Rotation versetzt und das Mittel **51** zum Besprühen von einer Lage zentrisch zum Pfannenboden radial zum Pfannenrand **10** nach aussen bewegt.

In einem zehnten Verfahrensschritt werden die Oberbalken **25a** und **25b** über die beiden Hubzylinder **71** und **71b** angehoben und um den Förderweg W, wie oben beschrieben, linear vorwärts und nach dem Ablegen der Pfannen **3** zurück bewegt, wodurch die erste Pfanne 3 in der fünften Bearbeitungsstation **B5** der Vorrichtung **13**, die zweite Pfanne **3** in der vierten Bearbeitungsstation **B4** der Vorrichtung **12** die dritte Pfanne 3 in der dritten Bearbeitungsstation **B3** der Vorrichtung **19**, die vierte Pfanne **3** in der zweiten Bearbeitungsstation **B2** der Vorrichtung **17** und die fünfte Pfanne 3 in der ersten Bearbeitungsstation **B1** der Vorrichtung **11** abgelegt wird.

In einem elften Verfahrensschritt wird eine sechste Pfanne **3** auf den Teller **75a** der Beladestation **73** abgelegt. Die fünfte bis zweite Pfanne **3** werden in der ersten, zweiten, dritten bzw. vierten Bearbeitungsstation **B1** bis **B4** der Vorrichtungen **11, 17, 19** und **21** analog zu den obigen Verfahrensschritten bearbeitet bzw. beschichtet. Die aus einer Haftschicht und zwei Beschichtungen mit dem magnetischen Material bestehende Beschichtung des äusseren Pfannenbodens **5** der ersten Pfanne **3** wird in der fünften Bearbeitungsstation **B5** der Vorrichtung **13** geschliffen. Das Mittel **45** zum Schleifen ist auch hier wieder vor Beginn des Schleifvorgangs zentrisch und höhenrichtig zum Pfannenboden **5** eingestellt und wird zum Schleifvorgang radial mit den Querverschubschlitten 57e zum Pfannenrand **10** bewegt.

In einem zwölften Verfahrensschritt werden die Oberbalken **25a** und **25b** über die beiden Hubzylinder **71** und **71b** angehoben und um den Förderweg W, wie oben beschrieben, linear vorwärts und nach dem Ablegen der Pfannen 3 zurück bewegt wird, wodurch die erste Pfanne **3** in der sechsten Bearbeitungsstation **B6** der Vorrichtung **15**, die zweite Pfanne **3** in der fünften Bearbeitungsstation **B5** der Vorrichtung **13**, die dritte Pfanne **3** in der vierten Bearbeitungsstation **B4** der Vorrichtung **12**, die vierte Pfanne **3** in der dritten Bearbeitungsstation **B3** der Vorrichtung **19**, die fünfte Pfanne **3** in der zweiten Bearbeitungsstation **B2** der Vorrichtung **17** und die sechste Pfanne 3 in der ersten Bearbeitungsstation **B1** der Vorrichtung **11** abgelegt wird.

In einem dreizehnten Verfahrensschritt wird eine siebte Pfanne **3** auf den Teller **75a** der Beladestation **73** abgelegt. Die sechste bis zweite Pfanne **3** werden in der ersten, zweiten, dritten, vierten bzw. fünften Bearbeitungsstation **B1** bis **B5** der Vorrichtungen **11, 17, 19, 21** und **13** analog zu den obigen Verfahrensschritten bearbeitet bzw. beschichtet. Die aus einer Haftschicht und zwei Beschichtungen mit einem magnetischen Material bestehende Beschichtung des äusseren Pfannenbodens der ersten Pfanne **3**, welche in der Behandlungsstation **B5** der Vorrichtung **13** geschliffen wurde, wird nun in der Behandlungsstation **B6** der Vorrichtung **15** gereinigt und kompaktiert. Hierzu werden Stahlkugeln aus dem zentrisch auf den Pfannenboden ausgerichteten Mittel **47** auf den Pfannenboden geschleudert, wobei das Mittel **47** während dieses Bearbeitungsvorgangs durch den Querverschubschlitten **57f** der Querverschubeinrichtung **41f** radial nach aussen zum Pfannenbodenrand bewegt wird.

In einem vierzehnten Verfahrensschritt werden die Oberbalken **25a** und 25b über die beiden Hubzylinder 71 und 71 b angehoben und die Fördereinrichtung **23** um den Förderweg W, wie oben beschrieben, linear vorwärts und nach dem Ablegen der Pfannen 3 zurück bewegt, wodurch die erste Pfanne 3 auf den Teller 75b der Entladestation 74 gelegt, die zweite Pfanne 3 in der sechsten Behandlungsstation **B6** der Vorrichtung 15, die dritte Pfanne 3 in der fünften Behandlungsstation **B5** der Vorrichtung 13, die vierte Pfanne 3 in der vierten Behandlungsstation **B4** der Vorrichtung 12, die fünfte Pfanne 3 in der dritten Behandlungsstation **B3** der Vorrichtung 19, die sechste Pfanne 3 in der zweiten Behandlungsstation **B2** der Vorrichtung 17 und die siebte Pfanne 3 in der ersten Behandlungsstation **B1** der Vorrichtung 11 abgelegt wird.

In den nun folgenden Beschichtungs- und Bearbeitungsschritten wird eine weitere Pfanne 3 auf den Teller 75a der Beladestation 73 gelegt. Das weitere Beladen, Entladen und die entsprechenden Beschichtungs- und Bearbeitungsschritte erfolgen, wie oben beschrieben, getaktet weiter. Alle Beschichtungs- und Bearbeitungsmittel **43, 45, 47, 49, 50, 51** stehen zu Beginn jedes Zyklusses jeweils zentrisch über dem betreffenden äusseren Pfannenboden und werden dann von dem entsprechenden Querverschubschlitten **57a** bis **57f** radial über den Pfannenboden bewegt.

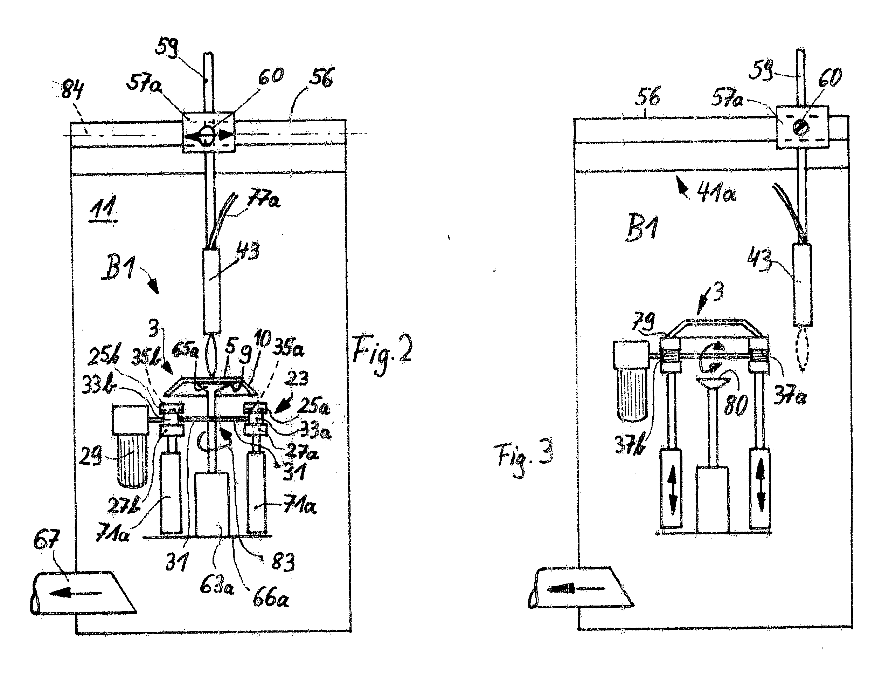

In **Figur 2** ist ein Blick auf die Stirnseite der Anlage **1** dargestellt, wobei die Beladestation **73** und die Aussenwand **69** der Vorrichtung **11** weggenommen sind. **Figur 2** zeigt eine Pfanne 3, deren innerer Pfannenboden **9** mittels Vakuum auf dem Vakuumteller **65a** fixiert ist. Die Pfanne 3 ist durch den Rotationsantrieb **63a** in eine rotierende Bewegung **83** versetzt. Wie schematisch angedeutet, trifft der Sandstrahl **81** hier zentrisch auf den äusseren Pfannenboden 5. Um den gesamten Pfannenboden **5** zu sandstrahlen, wird das den Sandstrahl **81** ausstossende Mittel **43** mit den Querverschubschlitten **57a** in dem oben beschriebenen Beispiel horizontal senkrecht zur Richtung des Förderwegs W verschoben. Wie bereits oben schon beschrieben, werden auch die restlichen Mittel **45, 47, 49, 50** und **51** analog verstellt. Die Richtung des Förderwegs **W** und eine Achse **84** der Querverschubschiene **56** liegen in zueinander parallelen Ebenen.

Die Bewegung aller oder auch nur einiger Mittel **43, 45, 47, 49, 50** und **51** muss nicht senkrecht zur Richtung des Förderwegs **W** erfolgen. Diese zueinander senkrechte Lage hat sich jedoch als vorteilhaft für eine unten beschriebene mäanderförmige Bearbeitung und Beschichtung ergeben. Auch müssen die Achsen **84** der Querverschubschienen 56 und die Richtung des Förderwegs **W** nicht in zueinander parallelen Ebenen liegen. Die parallelen Ebenen sind immer dann angezeigt, wenn ein ebener Pfannenaussenboden, wie bei induktionsbeheizbaren Pfannen, zu bearbeiten und beschichten ist. Sind Pfannenböden mit gewölbten Böden zu bearbeiten und zu beschichten, wird man die Achsen 84 der Querverschubschienen in zur Förderrichtung geneigten Ebenen anordnen oder die Querverschubschienen sogar gebogen ausbilden.

In den obigen Beschreibungsbeispielen werden die Mittel 45, 47, 49, 50 und 51 nur über relativ kleine Wege, wie sie lediglich zur Beschichtung und Bearbeitung benötigt werden, verschoben. Da die Querverschubschienen 56 in vorteilhafter Weise über die gesamte Breite der jeweiligen Vorrichtungen **11, 13, 15, 17, 19** und 21 ausgebildet sind, können die Mittel 45, 47, 49, 50 und 51 auch jeweils bis zum Rand der jeweiligen Vorrichtung 11, 13, 15, 17, 19 bzw. 21 bewegt werden. Eine derartige nun grössere Verschiebung der Mittel 45, 47, 49, 50 und 51 ist immer dann angezeigt, wenn der Pfannenrand eine Einstellhöhe, wie sie für das Beschichten und Bearbeiten benötigt wird, überschreitet. Eine derartige Verschiebung ist in Figur 3 dargestellt.

Oben sind rotationssymmetrische Beschichtungen und Bearbeitungen des äusseren Pfannenbodens 5 beschrieben worden. Ohne eine Änderung der Anlage 1 können jedoch auch Pfannenböden linear, d.h. mäanderförmig beschichtet werden. Es können somit Pfannenböden mit eckigen Konturen bearbeitet und beschichtet werden. Eine derart zu bearbeitende bzw. zu beschichtende Pfanne 90 wird von der Fördereinrichtung 23 auf den beiden Oberbalken 25a und 25b liegend angehoben und bis kurz vor den Einsatzort eines der Behandlungsmittel in den Behandlungsstationen **B1** bis **B6** transportiert. Nun beginnt dieses Behandlungsmittel zu arbeiten und die beiden Oberbalken 25a und 25b transportieren die Pfanne 90 mit einer definierten Geschwindigkeit in gleicher Richtung weiter während das Behandlungsmittel still steht. Nach Durchlaufen der Länge des zu bearbeitenden/beschichtenden Gegenstands 90 (Pfanne) hält die Fördereinrichtung **23** an, das Behandlungsmittel macht eine kleine Bewegung quer zur Richtung des Förderwegs W. Anschliessend werden die beiden Oberbalken **25a** und **25b** (Fördereinrichtung 23) wieder zurückgezogen bis das Behandlungsmittel wieder am anderen Ende des Gegenstands 90 angekommen ist. Es folgt nun eine weitere Querverschiebung, auf die wiederum eine Vorwärtsbewegung erfolgt. Diese mäanderförmige Bewegung wird fortgesetzt bis die gesamte Gegenstandsoberfläche bearbeitet bzw. beschichtet ist. Ist die gesamte Oberfläche des Gegenstands 90 beschichtet bzw. bearbeitet, wird der Gegenstand 90 von den Oberbalken 25a und 25b auf dem betreffenden Vakuumteller 65 abgesetzt. Die Oberbalken 25a und 25b fahren den Förderweg W unter den Gegenstand bzw. den Gegenständen 90 zurück; ein nächster Gegenstand 90 kann nun, wie oben beschrieben, aufgenommen werden.

Es können auch alle Querverschubschienen 56 in sämtlichen Vorrichtungen **11, 13, 15, 17**, **19** und **21** zusammen auf und ab bewegt werden, da die gesamte Bearbeitung der Pfannen **3** getaktet ist.

Das Aufbringen der magnetisierbaren Materialien auf dem mit einer Haftschicht versehenen Pfannenboden **5** erfolgt im oben beschriebenen Beispiel in den Behandlungsstationen **B3** und **B4** der Vorrichtungen **19** und **21**. Die magnetisierbare Schicht kann auch lediglich in einer einzigen Behandlungsstation der zweiten Vorrichtung aufgebracht werden. Es wird im oben beschriebenen Beispiel zuerst eine Eisenbeschichtung und dann eine Beschichtung mit einer Nickel-Eisenlegierung aufgebracht. Es kann aber auch lediglich nur eine Eisenbeschichtung oder nur eine Nickel-Eisen-Legierung aufgebracht werden. Eine Eisenbeschichtung ist ökonomisch. Eine Nickel-Eisen-Legierung ist teurer, aber dafür korrosionsfest.

Anstatt die Fördereinrichtung **23** u.a. mit den beiden Ober- und den beiden Unterbalken **25a/b** und **27a/b** auszurüsten, kann auf die Unterbalken **27a** und **27b** verzichtet werden. Die beiden Unterbalken **27a** und **27b** dienen lediglich zu einer einfacheren Montage des Antriebmotors 29 und der beiden Hubzylinder **71a** und **71b.**

Anstelle der beiden Ober- und zwei Unterbalken **25a/b** und **27a/b,** kann auch lediglich jeweils ein einziger Oberbalken (und eventuell ein einziger Unterbalken) verwendet werden, welcher im Bereich der jeweiligen Behandlungsstation in den Vorrichtungen einen dem Förderweg **W** entsprechenden Schlitz aufweist. Durch diesen Schlitz würde dann die Rotationsachse **64** greifen, was einen etwas erhöhten Montageaufwand bewirkt. Die Verwendung der Unterbalken **27a** und **27b**, welche über eine die Hubzylinderpaare **71a** bzw. **71** b tragende Grundplatte **66a** und **66b** gehalten sind, gibt der Fördereinrichtung **23** Stabilität und gestattet die Fördereinrichtung **23** als kompakte Einheit auszuwechseln.

Die Hubzylinder **71a** und **71b** sind in obigem Beispiel ausserhalb der Aussenwände **69a** der Vorrichtung **11** und ausserhalb der Aussenwand 70c der Vorrichtung **13** angeordnet beschrieben. Durch diese Anordnung können die Vorrichtungen **11** und **15** bis auf die jeweiligen Bearbeitungsmittel identisch ausgebildet werden. Die Hubzylinder **71a** und **71b** können jedoch auch in jeder Vorrichtung oder nur in der ersten und letzten Vorrichtung angeordnet werden.

Eine Konstruktion der Anlage, wie sie in den **Figuren 2** und **3** mit den beiden Ober- und Unterbalken **25a/b** und **27a/b** dargestellt ist, hat gegenüber den oben angeführten Ausführungsvarianten den Vorteil einer einfacheren und leichteren Konstruktion, wobei zudem auch noch die bewegte Masse gering gehalten werden kann.

Sollen rotationssymmetrische Oberflächen behandelt werden, so werden die diese Oberflächen aufweisenden Gegenstände **3** mit den betreffenden Vakuumteller **65a** bis **65f** gehalten. Die nicht rotationssymmetrischen, d.h. vieleckigen, karthesischen Oberfläche der Gegenstände **90** sind lediglich durch ihr Gewicht rutschfest auf den Oberbalken **25a/b** gehalten. Lediglich beim Schleifen in der 5. Behandlungsstation **B5** können seitliche Kräfte auftreten, welche den Gegenstand **90** verschieben könnten. Um ein Verschieben zu unterbinden, können in der 5. Benadlungsstation in der Vorrichtung **13** nicht dargestellte Stifte benachbart zu den Gegenstandsrändern angeordnet werden. Selbstverständlich könnte ein jeweiliger Gegenstand **90** in der Vorrichtung **13** auch mit dem Vakuumteller **65b** gehalten werden. In diesem Fall müsste jedoch die Halterung dieses Vakuumtellers **65b**, inklusive Rotationsantrieb 63b analog zu den Oberbalken **25a** und **25b** verschiebbar ausgebildet sein, was einen grösseren konstruktiven Aufwand bedeutet.

Eine "karthesische" Beschichtung lässt sich jedoch auch durch eine Überlagerung einer inkrementellen Drehbewegung und einer linearen Bewegung erreichen. In diesem Fall muss jedoch der Beschichtungsfluss aus dem betreffenden Arbeitsmittel **49** bis **51** gesteuert werden, da ansonsten bei einem ungesteuerten Auftrag in der Oberfläche eine Materialaufwölbung entstehen würden. Analog müsste auch mit den mechanischen Bearbeitungsmitteln **43**, **45** und **47** verfahren werden, da diese bei ungesteuerter, kontinuierlicher Bearbeitung die Oberflächenmitte stärker abtragen würden.

Alle Vorrichtungen **11, 13, 15, 17, 19** und 21 wird man vorzugsweise mit einer nicht dargestellten Gegenstandserkennungseinheit ausrüsten. Diese Gegenstandserkennungseinheit steuert dann auch die betreffenden Arbeitsmittel **43**, **45**, **47**, **49**, **50** und **51** und die betreffende Vakuumbeaufschlagung für den betreffenden Vakuumteller, sofern rotationssymmetrische Behandlungen vorgesehen sind. Eine derartige Steuerung hat den Vorteil, dass keinerlei besondere Vorkehrungen beim Start der Anlage getroffen werden müssen; auch muss die Anlage nicht kontinuierlich beladen werden. Es können somit auch problemlos Zwischenkontrollen ausgeführt werden. Es wird somit nur dort behandelt, wo auch ein Gegenstand vorhanden ist.

In den Behandlungsstationen **B2** bis **B4** wird in dem oben beschriebenen Ausführungsbeispiel mit einem Lichtbogensprühgerät gearbeitet. Anstelle dieses Gerätes kann auch mit einem autogenen Sprühgerät, mit HVOF (high velocity oxigen fuel) oder mit einem Plasmasprühgerät gearbeitet werden. Es müssen die Arbeitsgeräte in den Behandlungsstationen **B2** bis **B4** nicht vom gleichen Typ ausgebildet sein.

Es soll eine poröse Zwischenschicht für einen Ausgleich der Differenzen der Ausdehnungskoeffizienten α der metallischen Schichten aufgebracht werden. Es kann auch eine Zwischenschicht zwischen der Haftschicht und den magnetisierbaren Schichten aufgebracht werden. Die Dicke der Zwischenschicht wird derart gewählt, dass sie die thermischen Wärmeausdehnungsunterschiede auffangen kann.

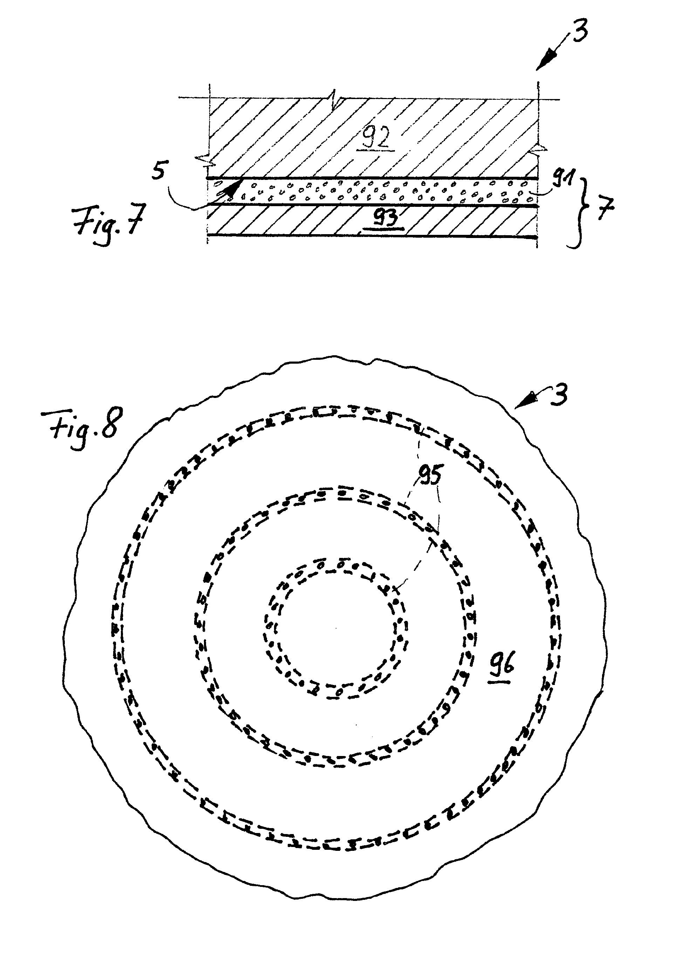

Es kann aber auch, wie in **Figur 7** dargestellt ist, eine Haftschicht **91** alleine als poröse Schicht zwischen dem Pfannenboden **92** und einer eisenhaltigen Schicht **93** aufgebracht werden. Die poröse Schicht wird man vorzugsweise nicht in der Haftschicht, sondern im induktionsgängigen Material anordnen. Eine poröse Schicht erhält man im Gegensatz zu einer kompakten Schicht, in dem der Abstand des Sprühgerätes zur zu besprühenden Oberfläche vergrössert wird. Die Darstellung der Schichten ist in **Figur 7** nicht massstäblich.

Anstatt die ganze Haftschicht als poröse Schicht (= Dilatationsausgleichsbereich) auszubilden, können, wie in **Figur 8** in einer Ausführungsvariante skizziert ist, in der dortigen Haftschicht auch poröse bandförmige Bereiche **95** ausgebildet werden. Diese bandförmigen Bereiche **95** sind von aussen nicht sichtbar, da sie durch eine eisenhaltige Schicht **96** abgedeckt sind. **Figur 8** ist nur eine Skizze und keine massstäbliche Darstellung. Die bandförmigen Bereiche können nun in sich geschlossen um ein Zentrum im Pfannenboden umlaufend ausgebildet sein. Für eine derartige Ausbildung wird das Sprühgerät zur Erzeugung des Dilatationsausgleichsbereichs über die Behandlungsmittelaufnahme **61d** angehoben und nach der Erzeugung des Bereichs wieder abgesenkt.

Es kann aber auch ein sich schneckenförmig über den Pfannenboden erstreckender Dilatationsausgleichsbereich erzeugt werden. Hierzu wird bei einem rotierenden Vakuumteller das Behandlungsmittel **49** entsprechend mittels Querverschubschlitten 57d nach aussen bewegt. Anschliessend erfolgt in der selben Vorrichtung **17** eine Beschichtung der noch verbliebenen Räume zwischen den Schneckenwindungen bei abgesenktem Behandlungsmittel **49**.

Wird ein Dilatationsausgleichsbereich in der Haftschicht erzeugt, so ist dessen Dicke im Bereich von 0,1 bis 0,5 mm. Eine nicht poröse Haftschicht liegt typischerweise in einem Dickenbereich von 0,01 bis 0,05 mm, vorzugsweise bei 0,02 mm.

Anstatt eine geschlossene poröse oder eine bandförmige Schicht zu erzeugen, können auch nur punktweise ("fettaugenartig") Dilatationsausgleichsbereiche angebracht werden, in dem das Behandlungsmittel während des Beschichtungsvorgangs kontinuierlich (oder stochastisch) auf- und ab bewegt wird.

Dilatationsausgleichsbereiche können in der Haftschicht, als zusätzliche Schicht oder auch in der eisenhaltigen Schicht angeordnet werden.

Man könnte als Dilatationsausgleichsbreiche auch Rillen und eine oder mehrere Nuten in den Pfannenboden ausserhalb der Vorrichtungen oder mit der Vorrichtung, welche den Pfannenboden sandstrahlt, einbringen. Auch könnten Erhebungen verwendet werden.

Die zu behandelnden Gegenstände 3 bzw. **90** können während des thermischen Sprühverfahrens mit Pressluft von unten, welche unterhalb der Unterbalken **27a/b** ausströmt, gekühlt werden. Bei sehr dünnwandigen Gegenständen im Bereich einer Bodendicke von 3 mm und weniger kann dann einem Verzug entgegengewirkt werden. Normalerweise erhitzen sich die oben beschriebenen Gegenstände mit einer Bodendicke von 6 mm auf etwa 200°C. Dünnwandige Gegenstände ohne Kühlung hingegen könnten sich auf etwa 400°C erhitzen. Die Bodendicke liegt typischerweise im Bereich von 2 bis 15 mm.

Einen guten Induktionbodenschichtaufbau ergaben die in der Tabelle angeführten Schichtdicken in Millimeter.

| **Schicht** | **ideal** | **maximal** | **minimal** |
|---|---|---|---|
| Haftschicht | 0,02 | 0,05 | 0,01 |
| Dilatationsschicht mit Haftmaterial | 0,23 | 0,6 | 0,1 |
| Dilatationsschicht, welche gleichzeitig Induktionsschicht ist | 0,22 | 0,7 | 0,1 |
| Induktionsschicht | 0,2 | 0,4 | 0,1 |
| Dicke des gesamten Pfannenbodenbeschichtung | 0,44 | 0,85 | 0,31 |

## Patentansprüche

1. Anlage (1) zur Beschichtung einer Oberfläche **(5)** wenigstens eines im Gebrauch Temperaturintervallen von mindestens 100°C aussetzbaren, Gegenstands (3; 90), vorzugsweise eines Kochgeräts, wobei ein Grundmaterial eines die zu beschichtende Oberfläche (5) aufweisenden Gegenstandteils einen thermischen Ausdehnungskoeffizienten (α) aufweist, der sich um einige zehn Prozent von demjenigen eines aufzubringenden Auftragmaterials unterscheidet, **gekennzeichnet durch** wenigstens eine erste Vorrichtung **(11, 13, 15)** zur mechanischen Bearbeitung des Grundmaterials bzw. des aufgebrachten Auftragmaterials und wenigstens eine zweite Vorrichtung **(17, 19, 21)** zum Aufbringen des Auftragmaterials, wobei insbesondere eine der Vorrichtungen, vofzugsweise die zweite Vorrichtung bzw. eine der zweiten Vorrichtungen **(17; 19)** ein Behandlungsmittel **(49; 50)** aufweist, mit dem ein Dilatationsausgleichsbereich **(91; 95)** über der Grundmaterialoberfläche **(5)** erzeugbar ist.

2. Anlage **(1)** nach Anspruch 1, **dadurch gekennzeichnet, dass** jede erste Vorrichtung **(11, 13, 15)** eine Positioniereinrichtung **(41a, 41b, 41c, 57a, 51b, 51c)** für ein erstes der Behandlungsmittel (**43, 45, 47**) zur Bearbeitung der Gegenstandsoberfläche **(5)** und jede zweite Vorrichtung (**17, 19, 21**) eine weitere Positioniervorrichtung **(41d, 41e, 41f; 57d, 57e, 57f**) für ein zweites der Behandlungsmittel **(49, 50, 51)** zum Aufbringen des Beschichtungsbelags aufweist, und vorzugsweise eine linear wirkende Fördereinrichtung **(23)**, mit der der Gegenstand **(3; 90)** auf einem Förderweg **(W)** von Vorrichtung zu Vorrichtung **(11, 13, 15, 17, 19, 21)** zur Beschichtung bzw. Bearbeitung, d.h. Behandlung bringbar ist, sowie jede Positioniereinrichtung eine Verschiebeeinrichtung **(41a-f, 57a-f)** hat, mit welcher ein entsprechendes Behandlungsmittel **(43, 45, 47, 49, 50, 51)** nicht parallel, vorzugsweise annähernd senkrecht, zu einer Bewegungsrichtung (53) der linear wirkenden Fördereinrichtung **(23)** verschiebbar ist, damit eine mäanderförmige Behandlung vornehmbar ist.

3. Anlage (1) nach Anspruch 2, **dadurch gekennzeichnet, dass** jede Vorrichtung **(11,13, 15, 17, 19, 21)** eine, vorzugsweise als Vakuumhalter **(65a-f)** ausgebildete, Halteeinrichtung aufweist, mit der jeder Gegenstand **(3)** zur Behandlung halterbar ist und die Fördereinrichtung **(23)** ein Fördermittel **(25a, 25b)** sowie eine auf das Fördermittel **(25a**, **25b)** wirkende Hebeeinheit **(71a, 71b)** hat, damit der jeweiligen Gegenstand (3) von der Halteeinrichtung **(65a-f)** abnehmbar und von einer der Vorrichtungen in eine andere transportierbar ist und eine Vorrichtung, vorzugsweise die zweite Vorrichtung bzw. eine der zweiten Vorrichtungen wenigstens eine derart verstellbare Höhenverstelleinheit **(59/57)** hat, dass ein Dilatationsausgleichsbereich erzeugbar ist.

4. Anlage **(1)** nach Anspruch 2 und 3, **dadurch gekennzeichnet, dass** jede Halteeinrichtung **(65a-f)** um eine, vorzugsweise zentrische, Achse **(64)** rotierbar ausgebildet ist, damit eine linear symmetrische, vorzugsweise rotationssymmetrische, Behandlung des jeweiligen Gegenstands **(3)** unter Zuhilfenahme der Fördereinrichtung **(23)** vornehmbar ist.

5. Anlage nach einem der Ansprüche 1 bis 4, **dadurch gekennzeichnet, dass** wenigstens eine der Vorrichtungen **(11, 13, 15, 17, 19, 21 )** als Kapelle mit einer Absaugeinrichtung **(67)** ausgebildet ist, und vorzugsweise die Vorrichtungen **(11, 13, 15, 17, 19, 21)** aneinanderliegend angeordnet sind.

6. Anlage **(1)** nach einem der Ansprüche 1 bis 5, **dadurch gekennzeichnet, dass** wenigstens eine erste Vorrichtung **(11, 13, 15)** vorhanden ist, welche ein Sandstrahlgerät **(43)**, ein Schleifgerät **(45)** bzw. Stahlkomstrahlgerät **(47)** aufweist und wenigstens eine zweite Vorrichtung **(17,19, 21)** vorhanden ist, welche ein erstes thermisches Sprühgerät **(49)** für eine Haftschicht, ein zweites thermischen Sprühgerät **(50)** für eine erste Induktionsschicht bzw. ein drittes thermisches Sprühgerät **(51)** für eine zweite Induktionsschicht aufweist und vorzugsweise die Fördereinrichtung **(23)** durch alle Vorrichtungen **(11,13,15, 17,19, 21)** hindurchlaufend ausgebildet ist, damit ein Boden **(5)** jedes, insbesondere als Küchengerät ausgebildeten, Gegenstands **(3; 90)** behandelbar ist, indem der Gegenstand **(3; 90)** mit der Fördereinrichtung **(23)** zum Sandstrahlgerät **(43)**, von diesem zum ersten, dann zum zweiten und dann zum dritten thermischen Sprühgerät **(49, 50, 51)**, von letzterem zum Schleifgerät **(45)** und von diesem zum Stahlkornstrahlgerät **(47)** transportierbar ist, um vorzugsweise das Küchengerät **(3; 90)** mit einer Induktionsbeschichtung als Kochgerät herzustellen.

7. Verfahren zum Beschichten von im Gebrauch Temperaturintervallen von mindestens 100°C aussetzbaren Gegenständen **(3; 90),** insbesondere Küchengeräten, wobei das Grundmaterial des die zu beschichtende Oberfläche **(5)** aufweisenden Gegenstandteils einen thermischen Ausdehnungskoeffizienten **(α)** aufweist, der sich um einige zehn Prozent von demjenigen des aufzubringenden Auftragmaterials unterscheidet, mit einer Anlage **(1)** nach einem der Ansprüche 1 bis 6, **dadurch gekennzeichnet, dass** in der Beschichtung wenigstens ein Dilatationsausgleichsbereich aufgebracht wird.

8. Verfahren nach Anspruch 7, **dadurch gekennzeichnet, dass** die Gegenstände **(3; 90)** in serieller Reihenfolge mit gleich langen Förderwegen **(W)** eines sich vorwärts und rückwärts bewegenden Fördermittels **(25a, 25b)** der Fördereinrichtung **(23)** von einer Vorrichtung zur nachfolgenden zur Behandlung transportiert werden und vorzugsweise zum Transport von Gegenständen **(3; 90)** das Fördermittel **(25a, 25b)** zur Gegenstandsaufnahme angehoben, in Förderrichtung um den Förderweg **(W)** vorwärts bewegt, zur Ablage der Gegenstände **(3; 90)** abgesenkt und im abgesenkten Zustand um den Förderweg **(W)** zurück bewegt wird.

9. Verfahren nach Anspruch 8 mit der Anlage **(1)** nach einem der Ansprüche 2 bis 6, **dadurch gekennzeichnet, dass** ein jeweils in jeder Vorrichtung **(11, 13, 15, 17, 19, 21)** angeordnetes Behandlungsmittel **(43, 45, 47, 49, 50, 51**) zur jeweiligen Gegenstandsbehandlung auf einen vorgegebenen Höhenabstand eingestellt und nicht parallel, vorzugsweise annähernd senkrecht, zu einer Bewegungsrichtung **(53)** der linear wirkenden Fördereinrichtung **(23)** verschoben wird, wobei für eine rotationssymmetrische Behandlung ein jeweiliger Gegenstand **(3)** in eine Rotation versetzt und das entsprechende Behandlungsmittel **(43, 45, 47, 49, 50, 51**) linear bewegt und für eine mäanderförmige Behandlung jeweils abwechselnd das Fördermittel **(25a, 25b)** der Fördereinrichtung **(23)** und dann das entsprechende Behandlungsmittel **(43, 45, 47, 49, 50, 51**) linear bewegt werden.

10. Verfahren nach Anspruch 7 bis 9, **dadurch gekennzeichnet, dass** die Gegenstände (3; 90) getaktet von einer Vorrichtung **(11,13, 15, 17, 19, 21)** in die jeweils nachfolgende transportiert werden, wobei beginnend ein jeweiliger Boden **(5)** eines Gegenstands **(3; 90)** sandgestrahlt, dann der sandgestrahlte Boden **(5)** mit einer Haftschicht versehen wird, anschliessend eine magnetisierbare Schicht aufgebracht wird, wobei während des Aufbringens der magnetisierbaren Schicht der Höhenabstand des betreffenden Behandlungsmittels verändert, insbesondere vergrössert wird, um in einem Beschichtungszeitraum mit höhenveränderten Behandlungsmittel einen Dilatationsausgleichsbereich zu erzeugen und anschliessend die aufgebrachten Schichten eben geschliffen und kompaktiert werden.

11. Verfahren nach Anspruch 10, **dadurch gekennzeichnet, dass** jeder Gegenstand **(3**; 90) beim Aufbringen der Haftschicht und/oder der magnetisierbaren Schicht mit einem Gasstrom gekühlt wird.

12. Gegenstand hergestellt nach einem Verfahren nach einem der Ansprüche 7 bis 11 mit einer Anlage nach einem der Ansprüche 1 bis 6, **dadurch gekennzeichnet, dass** ein eine Beschichtung tragendes Grundmaterial jedes Gegenstands einen thermischen Ausdehnungskoeffizienten (α) aufweist, der sich um einige zehn Prozente von demjenigen des auf das Grundmaterial aufgebrachten, in der Beschichtung befindlichen Auftragmaterials unterscheidet und die Beschichtung wenigstens einen Dilatationsausgleichsbereich aufweist, damit jeder Gegenstand Temperaturintervallen von mindestens 100° aussetzbar ist.

13. Gegenstand nach Anspruch 12, **dadurch gekennzeichnet, dass** das Grundmaterial des Gegenstands im wesentlichen aus Aluminium besteht, auf der eine Haftschicht aus einer Nickel-Aluminium-Legierung angeordnet ist, auf der wiederum eine Eisen enthaltende magnetisierbare Schicht vorhanden ist.

14. Gegenstand nach Anspruch 13, **gekennzeichnet durch** eine poröse Haftschicht mit einer Schichtdicke zwischen 0,1 und 0,5 mm, welche als Dilatationsausgleichsbereich zwischen der Eisen enthaltenden magnetisierbaren Schicht und dem Aluminiumgrundmaterial wirkt.

15. Gegenstand nach Anspruch 13, **dadurch gekennzeichnet, dass** die Eisen enthaltende magnetisierbare Schicht wenigstens einen, vorzugsweise in sich geschlossenen umlaufenden, Dilatationsausgleichsbereich mit einer Breite von 0,5 bis 5 mm und einer vorzugsweisen Schichtdicke zwischen 0,1 bis 0,5 mm aufweist.
